# EUROPEAN PATENT APPLICATION

(11) **EP 2 392 507 A1**
(43) Date of publication of application: **07.12.2011**
(21) Application number: 09006932.9
(22) Date of filing: 14.03.2008
(51) Int. Cl.: B62H 5/00, E05B 65/12, B62K 11/10, B60R 25/00

(54) **Motorcycle**

(30) Priority: 16.03.2007 JP 2007068942
(62) Divisional of application: 08250879.7
(71) Applicant: Yamaha Hatsudoki Kabushiki Kaisha, Shizuoka-ken Shizuoka 438-8501 (JP)
(72) Inventor: Yoshizawa, Akihiro, Iwata-shi Shizuoka-ken 438-8501 (JP)
(74) Representative: Lamb, Martin John Carstairs

(57) **Abstract**

A motorcycle includes an actuator (47) for releasing locking of a lid (32) locked in a vehicle body by operating a transmitter and a key cylinder (48) for releasing locking of the lid (32) by key operation. The actuator (47) and the key cylinder (48) are formed into one body.

## Description

### FIELD OF THE INVENTION

The invention relates to a motorcycle comprising an actuator for unlocking a vehicle component by operating an operation member and a key cylinder.

### BACKGROUND TO THE INVENTION

A remote control device is conventionally mounted in motorcycles for the purpose of preventing mischief or theft in some cases. JP-A-2005-119421 discloses a link mechanism for releasing a lock, the link mechanism being connected to a locking device for locking a seat in a vehicle body, and an actuator connected with the link mechanism through a cable,
wherein the actuator allows locking of the seat to be released without any key operation. In the case of mounting such a kind of remote control device, locking of a seat cannot be released due to discharge of a battery or the like in some cases. In order to prevent such a situation, a key cylinder is connected to the link mechanism through a cable in JP-A-2005-119421 mentioned above. In the case of discharge of a battery, it is arranged that key operation allows locking of the seat to be released.

In the conventional structure described above, however, a seat locking member is connected to the actuator and the key cylinder by means of different cables and increasing costs.

In view of the above conventional situation, an object of the invention is to provide a motorcycle capable of simplifying a structure and reducing the number of components and a cost.

### SUMMARY OF THE INVENTION

According to an aspect of the present invention there is provided a motorcycle comprising:
an actuator for unlocking a vehicle component by operating an operation member; and
a key cylinder for unlocking the vehicle component by key operation,
wherein the actuator and the key cylinder are formed into one body.

The actuator and the key cylinder may be connected with the vehicle component through a connection member. The connection member may comprise a wire cable.

The vehicle component may also be referred to herein as an operation subject member, and may comprise a lid, cover, cap, steering handle or the like, or any combination thereof. The vehicle component may comprise an open and close member supported on the vehicle body so as to be able to open and close and a lock mechanism for locking the open and close member in a closed state.

A battery may be provided on the inside of the open and close member.

The vehicle component may include at least first and second vehicle components. The first and second vehicle components may be adapted to be released by operation of the key or actuator in predetermined respective different directions. The predetermined directions may be opposite to each other.

The actuator and the key cylinder may be formed into one body through a housing.

The motorcycle may further comprise a body frame and a body cover enclosing said body frame. The actuator and the key cylinder may be provided on the inside of the body cover. The key cylinder may be arranged in a position capable of key operation from the outside of the body cover.

The body cover may define an opening part opening outward and the key cylinder may be arranged so that a key hole thereof is oriented towards the opening part of the body cover.

The motorcycle may further comprise a side stand for raising a vehicle body so that the vehicle body inclines to one side in a vehicle width direction, wherein the key cylinder may be provided in a part on the other side of the body cover in the vehicle width direction.

According to another aspect of the present invention there is provided a motorcycle comprising an actuator for releasing locking of an operation subject member locked in a vehicle body by operating an operation member and a key cylinder for releasing locking of the operation subject member by key operation, **characterized in that** the actuator and the key cylinder are formed into one body.

Other aspects may relate to an apparatus which comprises an integrally formed actuator and key cylinder.

In accordance with the invention, an actuator and a key cylinder are formed into one body. Accordingly, the number of wires can be reduced more than the conventional case that a lock device is connected to the actuator and the key cylinder by means of respectively different wires. This allows a structure to be simplified and the number of components and a cost to be reduced.

### BRIEF DESCRIPTION OF THE DRAWINGS

These and other aspects of the present invention will now be described, by way of example only, with reference to the accompanying drawings, in which:
Fig. 1 is a right side view of a motorcycle in accordance with an embodiment of the invention;
Fig. 2 is a left side view of a main seat and a housing box part in accordance with the embodiment;
Fig. 3 is a right side view showing arrangement of a lock release mechanism in accordance with the embodiment;
Fig. 4 is a rear view showing arrangement of the lock release mechanism;
Fig. 5 is a rear view of the periphery of a handle in accordance with the embodiment;
Fig. 6 is a plan view of the periphery of a housing box in accordance with the embodiment;
Fig. 7 is a perspective view of a lock release mechanism in accordance with the embodiment;
Fig. 8 is a simplified view of a structure of a lock release mechanism in accordance with the embodiment;
Fig. 9 is a side view of a seat lock mechanism in accordance with the embodiment;
Fig. 10 is a sectional side view of a trunk lid and a fuel lid part in accordance with the embodiment (a sectional view taken along a line X-X in Fig. 5);
Fig. 11 is a sectional side view of a left lid part in accordance with the embodiment (a sectional view taken along a line XI-XI in Fig. 5); and
Fig. 12 is a sectional side view of a handle lock button part in accordance with the embodiment (a sectional view taken along a line XII-XII in Fig. 5).

### DETAILED DESCRIPTION OF THE DRAWINGS

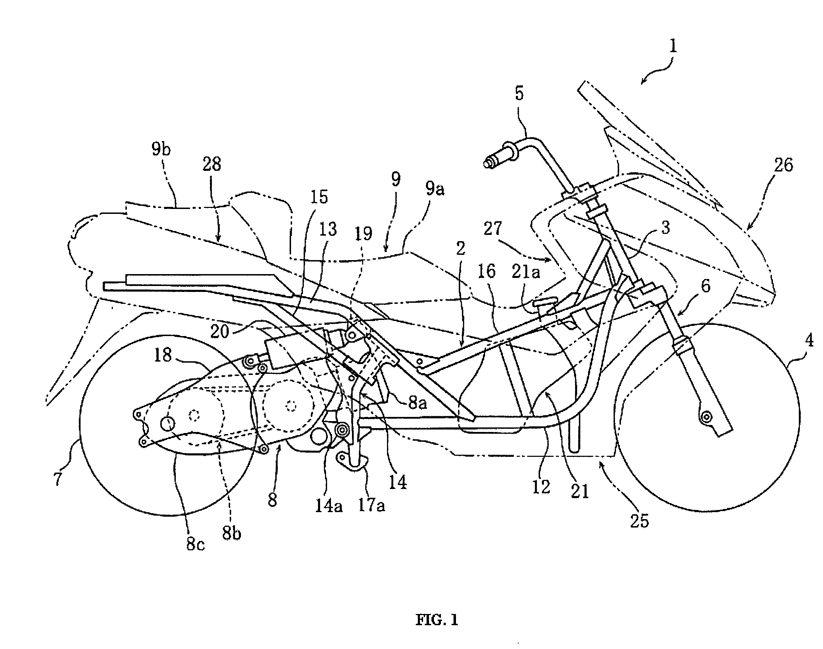

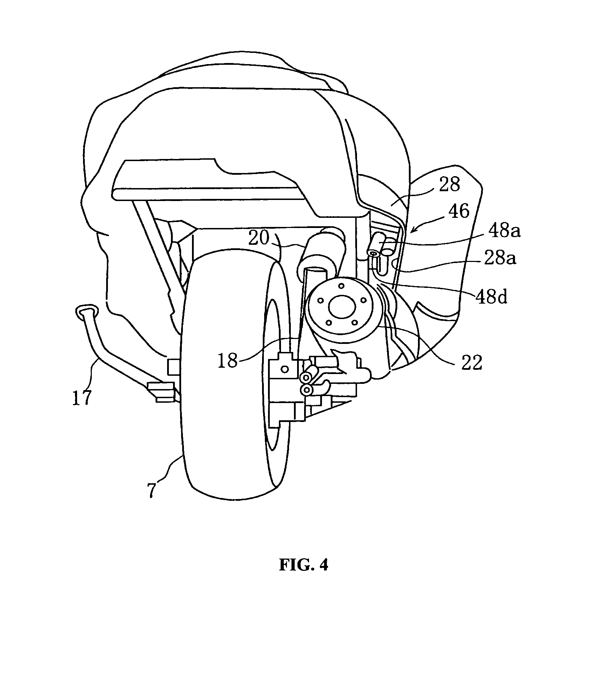

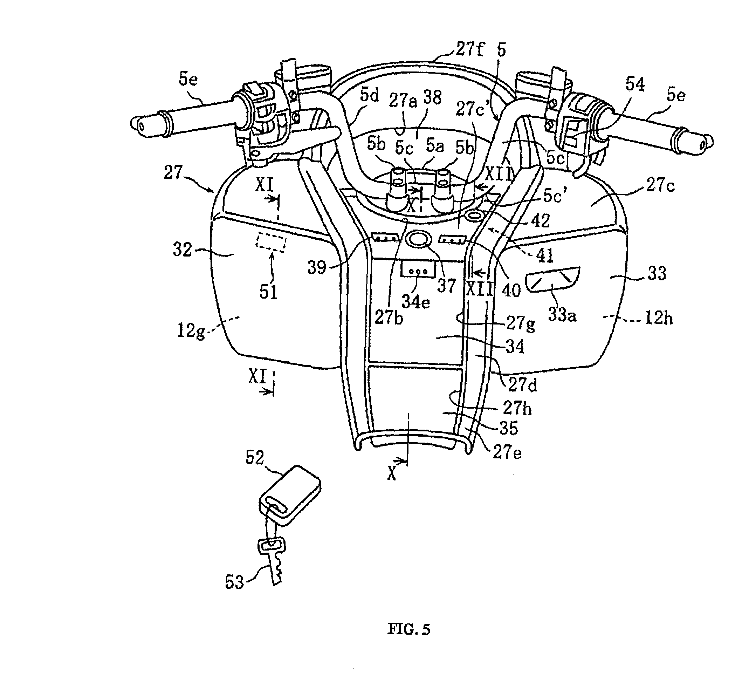

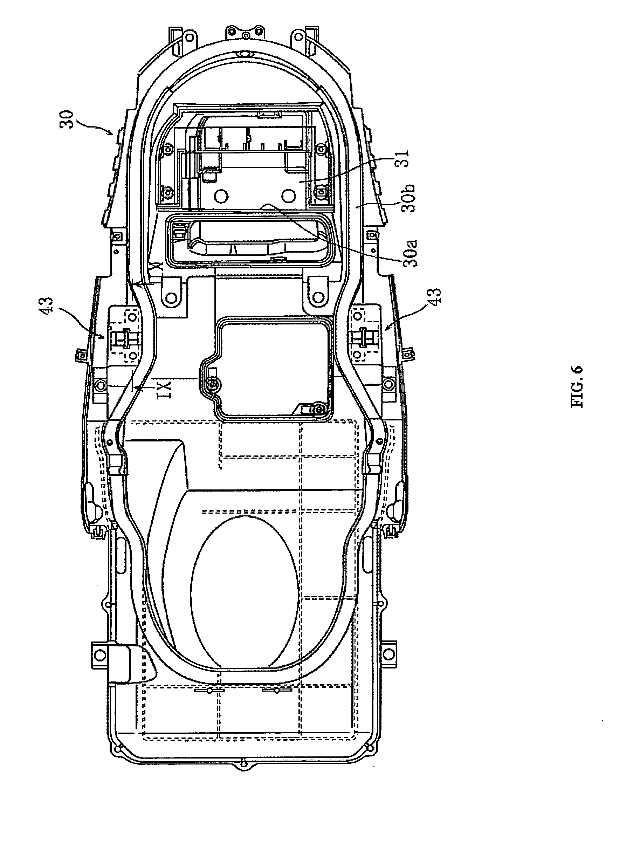

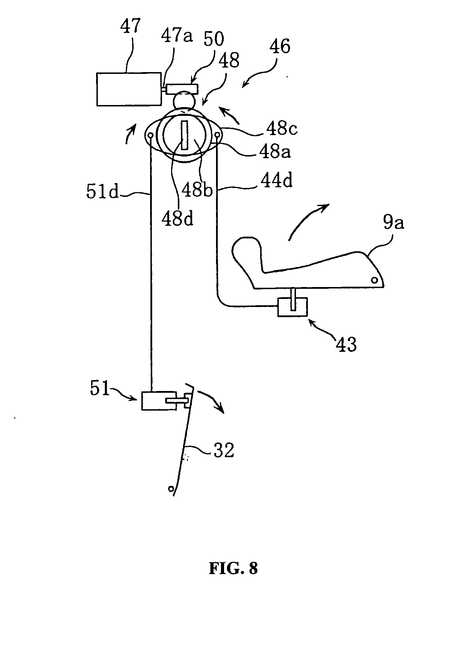

Figs. 1 to 12 illustrate a motorcycle in accordance with an embodiment of the invention. In the description of the embodiment, a back-and-forth direction and a right-and-left direction mean those in view of a rider sitting on a seat.

In the drawings, 1 denotes a scooter type motorcycle.
The motorcycle 1 includes a body frame 2 and a front fork 6 which is pivotally supported on a head pipe 3 provided at a front end of the body frame 2. with the front fork 6 supports a front wheel 4 in a lower end part thereof and a steering handle 5 in an upper end part thereof. A unit swing type engine unit 8 is supported on the body frame 2 so as to be swingable in the vertical direction, wherein the engine unit 8 supports a rear wheel 7 at a rear end part thereof. A straddle-type seat 9 is provided above a rear side of the body frame 2.

The body frame 2 includes right and left down tubes 12, which open in the vehicle width direction and extend from the head pipe 3 downward toward the rear side to extend substantially horizontally toward the rear side from the lower end. The body frame 2 also includes right and left seat rails 13 extending from respective middle parts of the right and left down tubes 12 obliquely upward toward the rear side. The body frame 2 further includes right and left engine suspension members 14 which extend in the vertical direction from respective rear end surfaces of the right and left down tubes 12 and whose upper end parts are connected to respective seat rails 13.

The body frame 2 further includes right and left seat stays 15, which are bridged over the right and left engine suspension members 14 and the seat rails 13 to be connected, and right and left upper tubes 16, which extend obliquely downward toward the rear side from respective connection parts of the right and left down tubes 12 of the head pipe 3 and which are connected to the seat rails 13.

The engine unit 8 is mounted so that a cylinder axis is arranged in a substantially horizontal direction. The engine unit 8 has a structure that an engine body 8a is coupled with a transmission case 8c in which a V-belt type continuously variable transmission 8b is housed. The engine unit 8 is supported so as to be swingable in the vertical direction through a pivot shaft member 14a provided in the right and left engine suspension members 14.

A swing arm 18 is provided on the right side of the engine unit 8 with respect to the rear wheel 7. A front end part of the swing arm 18 is connected to the engine unit 8 while a rear end part is connected to the rear wheel 7. The swing arm 18 is connected to a cross pipe 19 for connecting the right and left seat rails 13 by means of a rear suspension 20 provided substantially horizontally in the back-and-forth direction.

A fuel tank 21 is provided in a space enclosed by the right and left down tubes 12 and the right and left upper tubes 16. On an upper wall part of the fuel tank 21, there is formed a fuel filling port 21a which extends upward.

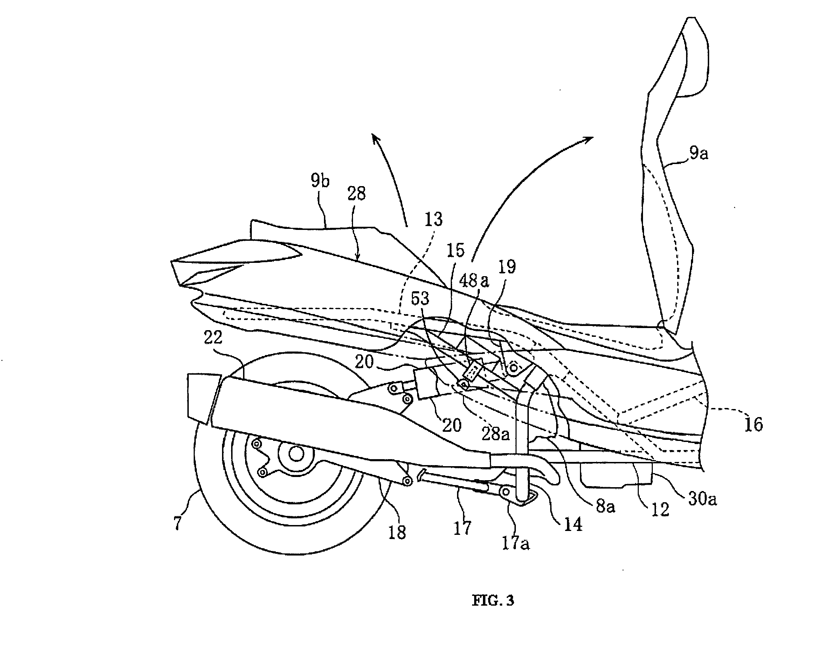

At a lower end part of the right and left engine suspension members 14, a main stand 17 (see Fig. 3) is supported rotatably between a rising position and a housing position through a stand bracket 17a. On the front side of the main stand 17 of the left down tube 12, a side stand (not shown) is supported rotatably between the rising position and the housing position for supporting the vehicle body in a state that the body inclines toward the left.

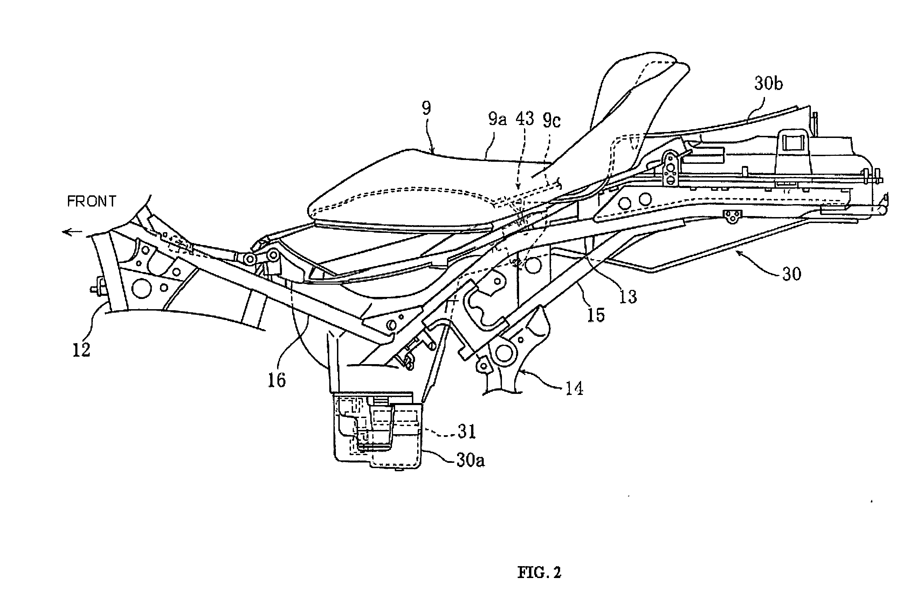

Under the seat 9, there is provided a housing box 30 opening upward (see Fig. 2). An opening edge 30b of the housing box 30 is air-tightly sealed by means of a seal member (not shown) mounted on a bottom plate of the seat 9. The housing box 30 extends substantially over the whole length of the seat 9 in the back-and-forth direction and in a size capable of housing two helmets, golf equipment and a long object such as a bat. A battery housing part 30a in which a battery 31 is housed is formed at a front end part of the housing box 30.

The seat 9 is formed from a main seat 9a and a tandem seat 9b formed separately from the main seat 9a. The main seat 9a is supported rotatably forward about a front end part. The tandem seat 9b is supported rotatably rearward about the rear end part. Opening the main seat 9a and the tandem seat 9b forward and rearward, respectively, causes the whole area of the opening edge 30b of the housing box 30 to be exposed upward.

The motorcycle 1 in accordance with the embodiment includes a body cover 25 provided so as to enclose the body frame 2. The body cover 25 includes a front cover 26 for covering the front side of the head pipe 3, a leg shield 27 provided behind the head pipe 3 for covering the front side of a rider's legs and a side cover 28 for covering a lower peripheral part of the seat 9.

The leg shield 27 has an inclining wall part 27c inclining so that the rear side is lower than the front side. The leg shield 27 also includes a longitudinal wall part 27d extending downward from a rear edge of the inclining wall part 27c and a channel-shaped stride part 27e extending rearward from a lower edge of the longitudinal wall part 27d for covering an upper part and right and left sides of the fuel tank 21. The stride part 27e is concaved in the back-and-forth direction of the motorcycle so as to be located at a position lower than the seat 9 to permit the stride part 27e to be easily straddled for a rider when mounting and dismounting. Further, at a front edge of the inclining wall part 27c there is formed a peak part 27f extending upward for covering the front side of a meter unit 38.

At a center part 27c' of the inclining wall part 27c there are formed a meter mounting hole 27a for mounting the meter unit 38 and a bracket hole 27b for providing a handle bracket 5a. The handle bracket 5a is fixed to an upper end of the front fork 6. A center part 5c of the steering handle 5 is fixed to the handle bracket 5a via handle clamps 5b. The steering handle 5 has the center part 5c, a rising part 5d connected to the center part 5c to rise upward and a grip part 5e connected to the rising part 5d to extend substantially horizontally again.

On the right and left outer sides of the longitudinal wall part 27d of the leg shield 27, right and left housing concave parts 12h and 12g are formed so as to expand forward. The right and left housing concave parts 12h and 12g are covered with right and left lids 33 and 32, respectively, so as to be able to open and close.

A lower end part of the right lid 33 is pivotally supported by means of a pin while an engaging mechanism for engaging the right lid 33 with the inclining part 27c of the leg shield 27 is provided at an upper end part of the right lid 33, although they are not shown. The engaging mechanism is automatically engaged by manually rotating the right lid 33 to a closed position while the engagement can be released by pulling a knob 33a.

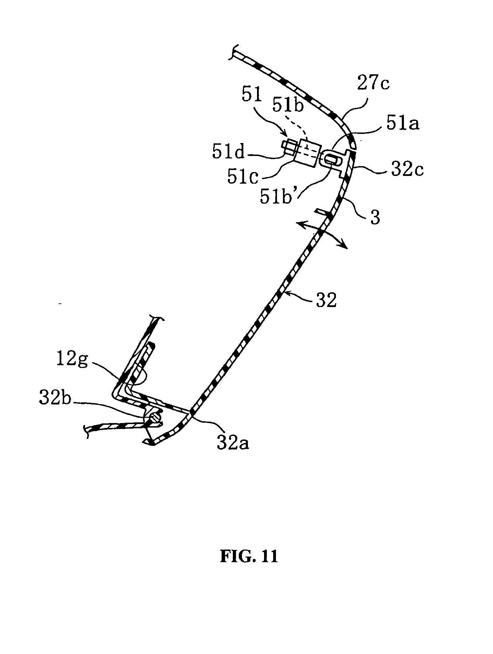

On the other hand, the left lid 32 is arranged such that a lower end part 32a thereof is pivotally supported on a pin 32b (see Fig. 11) and an upper end part 32c is rotatable rearward about the pin 32b. On an inner surface of the upper end part 32c of the left lid 32 there is provided a lid lock mechanism 51 capable of releasing locking by means of a later-mentioned actuator and key operation.

The lid lock mechanism 51 includes a ring-shaped hook member 51a fixed to a back surface of the upper end part 32c of the left lid 32, a lock member 51b having at a top end part thereof a hook-shaped lock claw 51b' for engaging with and disengaging from the hook member 51a and a bracket 51c for rotatably supporting the lock member 51b. The lock member 51b is urged to a locking direction. A side opposite to the lock claw of the lock member 51b is connected to a wire cable 51d for carrying out a lock release operation.

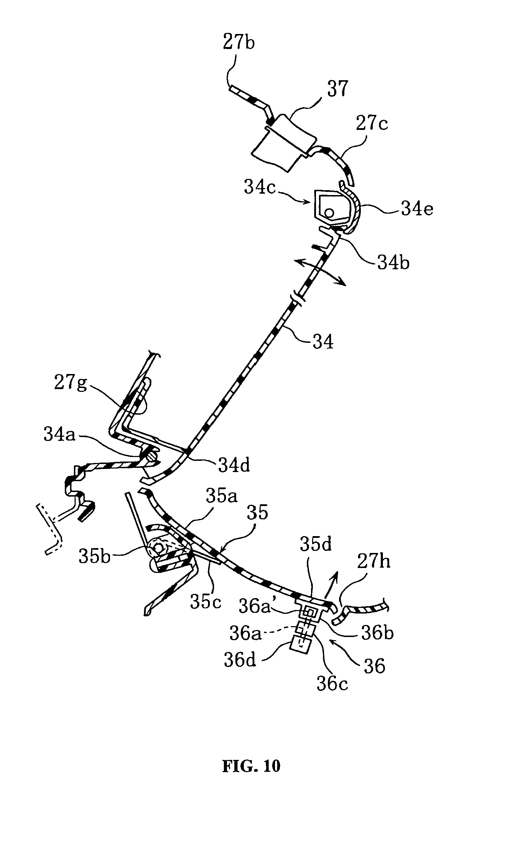

Moreover, in the longitudinal wall part 27d there is formed a trunk concave part 27g of the size over the substantially whole area of the longitudinal wall part 27d so as to expand forward. An opening of the trunk concave part 27g is covered with a trunk lid 34 so as to be able to open and close. The trunk lid 34 is supported so that a lower edge 34d (see Fig. 10) is swingable in the back-and-forth direction about a hinge pin 34a. An upper edge 34b is provided with an engaging mechanism 34c. The upper end 34b of the trunk lid 34 is arranged to be able to engage with the inclining wall part 27c through a knob 34e of the engaging mechanism 34c. The engaging mechanism 34c is arranged to automatically engage by manually rotating the trunk lid 34 to a close position and to be able to release the engagement by depressing the knob 34e.

A rectangular opening 27h is formed in a part of the stride part 27e, the part facing the fuel filling port 21a of the fuel tank. A fuel lid 35 is provided in the opening 27h. A front edge 35a of the fuel lid 35 is supported so as to be rotatable in the vertical direction about a hinge pin 35b and is urged to an opening direction by means of a spring 35c.

A rear edge 35d of the fuel lid 35 is provided with a fuel lid lock mechanism 36. The fuel lid lock mechanism 36 comprises a hook member 36b fixed to an inner surface of the rear edge 35d of the fuel lid 35, a lock member 36a having a lock claw 36a' capable of engaging with and disengaging from the hook member 36, a bracket 36c for rotatably supporting the lock member 36a and a solenoid 36d for rotating the lock member 36a in a direction for releasing locking.

Rotating the fuel lid 35 to the closed position causes the lock claw 36a' of the lock member 36 to automatically engage with the hook member 36b, so that the fuel lid 35 is locked in the closed position. On the other hand, turning on the solenoid 36d causes the solenoid 36d to rotate the lock member 36a in the direction for releasing locking to release locking, so that the fuel lid 35 rises a little by means of the spring 35c.

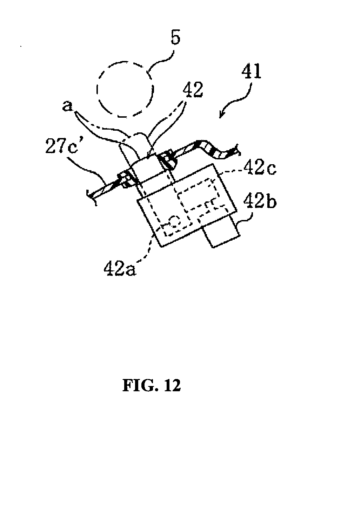

Under a right edge of the handle insertion hole 27b of the inclining wall part 27c there is provided a handle lock mechanism 41. The handle lock mechanism 41 is arranged so that pushing a handle lock button 42 while the steering handle 5 is turned to either of the right and left directions, to the left in the embodiment, would cause a lock pin 42a (see Fig. 12) to engage with a lock hole on a vehicle body side, and thereby, to lock the steering handle 5 at a position of an angle of the rotation. Further, rotating a cam mechanism 42c by means of a motor 42b in accordance with a handle lock release signal allows the handle lock button 42 to move to a lock release position. The handle lock button 42 is thus moved to the lock release position by means of a return spring (not shown).

As shown in Fig. 12, an upper end surface "a" of the handle lock button 42 is at the height substantially same as that of an upper surface of the center part 27c' of the inclining wall part 27 of the leg shield 27 in a state of locking (a state shown by a solid line in Fig. 12). In a state of releasing locking (a state shown by a double-dotted line in Fig. 12), the upper end surface "a" projects upward from the center part 27c'. This allows judgment of the state of locking or unlocking to be easily carried out.

Moreover, the handle lock button 42 is located under a corner part 5c' between the center part 5c and the right rising part 5d of the steering handle 5. The location is behind the corner part 5c' and is a little difficult to be seen while it is easily seen when the steering handle 5 is turned to the left, in view from an upper side in riding.

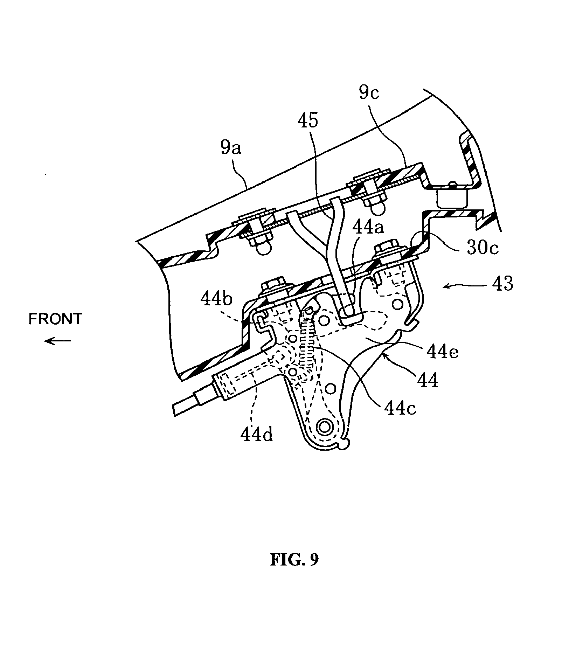

The main seat 9a is provided with a seat lock mechanism 43 (see Fig. 9) for locking the main seat 9a in a position where the housing box 30 is closed. The seat lock mechanism 43 includes a lock body 44, which is fixed to a mounting pedestal 30c formed on an outer side of an edge of the opening 30b of the housing box 30, and a striker (a locked member) 45, which is fixed to a bottom plate 9c of the main seat 9a. The lock body 44 includes a support bracket 44e fixed to the mounting pedestal 30c, an engaging claw 44a supported rotatably between a lock position where the striker 45 engages with the bracket 44e and an unlock position where the locking is released, a link bar 44b for turning the engaging claw 44a to the unlock position and a coil spring 44c for urging the engaging claw 44a to a locking direction or an unlocking direction in accordance with a position of the rotation angle of the engaging claw 44a. That is to say, the coil spring 44c urges the engaging claw 44a to the locking direction when the engaging claw 44a is located at the locking position shown by a solid line in Fig. 9. On the other hand, the coil spring 44c urges the engaging claw 44a to the unlocking direction when the engaging claw 44a is located at the unlocking position rotated by 90 degrees in a counterclockwise from a state shown in Fig. 9.

The link bar 44b is connected to the wire cable 44d.
The wire cable is connected to the lock release mechanism 46.

The lock release mechanism 46 is for making locking of the lid lock mechanism 51 and the seat lock mechanism 43 releasable by means of both an actuator and a manual operation.

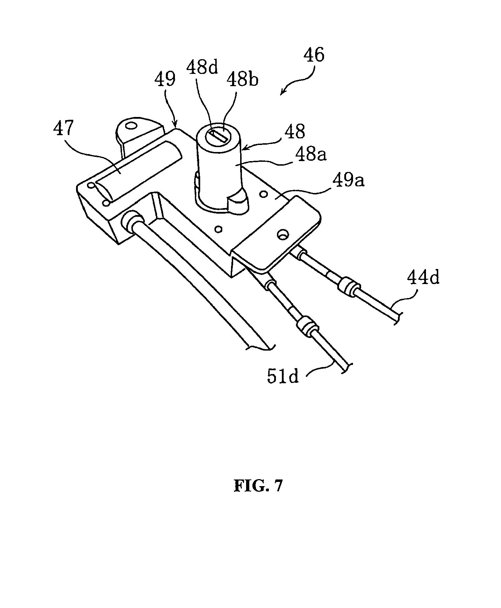

The lock release mechanism 46 is formed from an electric motor (an actuator) 47 (see Fig. 7) and a key cylinder 48, which are formed into one body by means of a common casing 49. The electric motor 47 is housed in a box-shaped case body 49a of the casing 49. The key cylinder 48 is fixed to the case body 49a so as to project upward from an upper surface of the case body 49a. An axial line of the key cylinder 48 makes a right angle with an axial line of the electric motor 47 in view from a wire cables 44d and 51d side in Fig. 7. The key cylinder 48 includes a column-shaped cylinder 48a and a rotation body 48b rotatably inserted into the cylinder 48a. 48d denotes a key insertion hole.

At a lower end of the rotation body 48b there is fixed an arm member 48c provided in the case body 49a. One end of the arm member 48c is connected to the wire cable 44d for the main seat 9a. The other end is connected to one end of the wire cable 51d for the left lid 32.

Rotation of a rotation shaft 47a of the electric motor 47 is transmitted to the arm member 48c through a worm gear mechanism 50.

The lock release mechanism 46 is fixed to the right seat stay 15 of the body frame 2. The seat stay 15 is covered with the side cover 28 from the outer side in the vehicle width direction. Accordingly, the lock release mechanism 46 is provided on the inside of the side cover 28. This causes the lock release mechanism 46 to be enclosed by the side cover 28 located on the outer side in the vehicle width direction, the rear suspension 20 located on the inner side in the vehicle width direction and a muffler 22 located on a lower side. Therefore, muddy water or the like can be prevented from splashing the lock release mechanism 46 in running.

Further, the lock release mechanism 46 is mounted to the seat stay 15 so that the key insertion hole 48d of the key cylinder 48 would be faced obliquely downward toward the rear side, so that the key insertion hole 48d is pointed to the outer side of the lower opening 28a of the side cover 28. This allows a key operation in which the key 53 is inserted into the key insertion hole 48d from the outer side of the side cover 28 to rotate the key 53 to be easily carried out while the lock release mechanism 46 is provided on the inner side of the side cover 28.

Moreover, the motorcycle 1 in accordance with the embodiment includes a side stand on the left side in the vehicle width direction although this is not shown in the drawings. This causes the vehicle body to incline to the left in using the side stand. Accordingly, the key insertion hole 48d of the key cylinder 48a is located on a side opposite to the inclination. From this point of view, the key operation is also made further easier.

A main switch 37 is provided in a part on the rear side of the handle insertion hole 27b of the inclining wall part 27c' at the center part. A left switch 39 and a right switch 40 are provided on the left and right sides of the main switch 37, respectively.

The motorcycle 1 in accordance with the embodiment comprises a smart key system. In the smart key system, an ID inquiry whether an ID signal from a mobile transmitter 52 carried by a rider accords with a pre-registered ID code or not is started when the rider push the main switch 37. In the case of accordance, a main power source is turned on, locking of the handle by means of the handle lock mechanism 41 is released, and then, the handle lock button 42 projects upward from the center part 27c' of the inclining wall part 27c to create the unlock state. Pushing a starter button 54 provided in the grip part 5e of the steering handle 5 in this state causes the engine to start.

Pushing the right switch 40 provided at the center part 27c' of the inclining wall part 27c for comparatively long time (one second or more, for example) causes the solenoid 36d of the fuel lid lock mechanism 36 to turn on and locking of the fuel lid 35 to be released, so that fueling can be performed.

Pushing the right switch 40 for comparatively short time (less than one second, for example) causes the electric motor 47 of the lock release mechanism 46 to rotate. This causes the arm member 48c to rotate counterclockwise to transmit the rotation of the arm member 48c to the seat lock mechanism 43 of the main seat 9a through the wire cable 44d, so that locking of the seat by means of the seat lock mechanism 43 is released. On the other hand, pushing the left switch 39 causes the electric motor 47 of the lock release mechanism 46 to rotate the arm member 48c clockwise, and thereby, locking of the lid lock mechanism 51 of the left lid 32 is released.

In order to release locking of the main seat 9a in the case that locking cannot be released by means of the electric motor 47 because of an excessive discharge of the battery 31, the key 53 is inserted into the key hole 48d of the key cylinder 48 of the lock release mechanism 46 to rotate the key 53 counterclockwise. Then, the rotation of the arm member 48c is transmitted to the seat lock mechanism 43 through the wire cable 44d to release locking of the main seat 9a. This allows the main seat 9a to be opened for taking out a contained object and the battery 31 to be charged. The key 53 is turned clockwise in order to open the left lid 32. This causes the rotation of the arm member 48c to be transmitted to the lid lock mechanism 51 through the wire cable 51d to release locking of the left lid 32, so that a contained object can be taken out.

As described above, in accordance with the embodiment, the electric motor (the actuator) 47 and the key cylinder 48 are formed into one body. Accordingly, only two wire cables 44d and 51d are required to release locking of two operation subject members of the main seat 9a and the left lid 32. This allows the structure to be simplified and the number of components and a cost to be reduced.

Further, the key operation is arranged to be able to open the main seat 9a manually while the battery 31 is provided inside the housing box 30 under the main seat 9a. This allows the battery 31 to be taken out by the key operation in the case of discharge of the battery, so that the battery 31 can be charged.

The lock release mechanism 46 formed from the electric motor 47 and the key cylinder 48 is provided on the inside of the side cover 28 enclosing the body frame. This allows the key cylinder 48 to be difficult to be seen from the outside, so that mischief or the like can be prevented.

Moreover, the key cylinder 48 is arranged at a position on the inner side of the side cover 28, the position being capable of key operation from the outer side of the side cover 28. This allows the key cylinder 48 to be difficult to be seen from the outside and good performance of the key operation to be secured.

In addition, the key cylinder 48 is arranged so that the key hole 48d of the key cylinder 48 is oriented towards the opening part 28a of the side cover 28. This allows performance of the key operation to be improved. Furthermore, the key cylinder 48 is arranged on a side opposite to the inclination of the vehicle body in using the side stand. This allows performance of the key operation to be further improved.

A case that the operation subject members or vehicle components are the main seat and the lid has been described.
However, the operation subject members are not limited to the above.

Further, a connection member of the invention is not limited to a wire cable although a wire cable is exemplified as the connection member for the actuator and the key cylinder. A link mechanism may be used for connection.

Moreover, in the exemplary embodiment described the actuator and the key cylinder are provided on the inner side of the side cover. However, locations for providing the actuator and the key cylinder in the invention are not limited to the above. The actuator and the key cylinder may be provided in a housing part opened and closed by means of a lid, for example.

### Description of the Reference Numerals and Signs

1: MOTORCYCLE
2: BODY FRAME
28: SIDE COVER (BODY COVER)
28a: OPENING PART OF BODY COVER
31: BATTERY
32, 9a: LEFT LID, MAIN SEAT (FIRST AND SECOND VEHICLE COMPONENTS OR OPERATION SUBJECT MEMBERS)
32, 9a: LEFT LID, MAIN SEAT (OPEN AND CLOSE MEMBER)
43, 51: SEAT LOCK MECHANISM, LID LOCK MECHANISM
44d, 51d: WIRE CABLE (CONNECTION MEMBER)
47: ELECTRIC MOTOR (ACTUATOR)
48: KEY CYLINDER
48d: KEY HOLE
49: HOUSING
52: TRANSMITTER (OPERATION MEMBER)
53: KEY

## Claims

1. A motorcycle (1) comprising:
an actuator (47) for unlocking a vehicle component (9a) by operating an operation member (52); and
a key cylinder (48) for unlocking the vehicle component (9a) by key operation,
wherein the actuator (47) and the key cylinder (48) are formed into one body.

2. The motorcycle (1) according to Claim 1, wherein the actuator (47) and the key cylinder (48) are connected with the vehicle component (9a) through a connection member (44d).

3. The motorcycle (1) according to Claim 2, wherein the connection member (44d) comprises a wire cable.

4. The motorcycle (1) according to Claim 1, 2 or 3, wherein the vehicle component (9a) comprises an open and close member adapted to open and close, and a lock mechanism 43 for locking the open and close member in a closed state.

5. The motorcycle (1) according to Claim 4, wherein a battery (31) is provided on the inside of the open and close member.

6. The motorcycle (1) according to any preceding Claim,
wherein the vehicle component includes at least first and second vehicle components (9a, 32).

7. The motorcycle (1) according to Claim 6, wherein the first and second vehicle components (9a, 32) are adapted to be released by operation of the key or actuator (47) in predetermined respective different directions.

8. The motorcycle (1) according to any preceding Claim,
wherein the actuator (47) and the key cylinder (48) are formed into one body through a housing (49).

9. The motorcycle (1) according to any preceding Claim, further comprising a body frame (2) and a body cover (28) enclosing said body frame (2), wherein the actuator (47) and the key cylinder (48) are provided on the inside of the body cover (28) and the key cylinder (48) is arranged in a position capable of key operation from the outside of the body cover (28).

10. The motorcycle (1) according to Claim 9, wherein the body cover (28) defines an opening part (28a) opening outward and the key cylinder (48) is arranged so that a key hole (48d) thereof is oriented towards the opening part (28a) of the body cover (28).

11. The motorcycle (1) according to Claim 9 or 10, further comprising a side stand (7) for raising a vehicle body so that the vehicle body inclines to one side in a vehicle width direction, wherein the key cylinder (48) is provided in a part on the other side of the body cover in the vehicle width direction.
